(19) Europäisches Patentamt / European Patent Office / Office européen des brevets

(11) **EP 4 764 619 A1**

(12) **EUROPEAN PATENT APPLICATION**

(43) Date of publication:
**24.06.2026 Bulletin 2026/26**

(21) Application number: **24307184.2**

(22) Date of filing: **19.12.2024**

(51) International Patent Classification (IPC):
**G01V 20/00** (2024.01)  **E21B 43/30** (2006.01)

(52) Cooperative Patent Classification (CPC):
**G01V 20/00;** E21B 43/12; E21B 2200/20;
G01V 2210/644

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **TotalEnergies OneTech**
**92400 Courbevoie (FR)**

(72) Inventor: **BERGEY, Pierre**
**64000 PAU (FR)**

(74) Representative: **Plasseraud IP**
**104 Rue de Richelieu**
**CS92104**
**75080 Paris Cedex 02 (FR)**

(54) **DETERMINATION OF FLOW ENTITIES LOCATIONS FOR OPERATING A RESERVOIR**

(57)    It is disclosed a method for determining the locations of flow entities for operating a reservoir, comprising:
- Receiving a geological description of the reservoir,
- building a geographical graph comprising nodes and edges between nodes,
wherein each node represents a flow entity location and is assigned geographic coordinates, and each edge represents relationships between adjacent nodes and is assigned a value of at least one edge property derived from the geological description of the reservoir,
- implementing a deformation process on the geological graph, comprising:
∘ defining a geological quantity over the geological graph, being function of the spacing between the nodes and of the edge property assigned to the edges of the graph,
∘ starting from initial coordinates of the nodes, adjusting the locations of the nodes based on the defined geological function, and

- outputting the adjusted flow entities locations as determined locations for operating the reservoir.

● Type #1 nodes (e.g., producers wells) A,B,C,F,G,H,…
○ Type #2 nodes (e.g., water injectors wells) I,J,…
—— Type #1 to Type #1 edge
—— Type #2 to Type #2 edge
—— Type #1 to Type #2 edge

**FIG. 2**

EP 4 764 619 A1

**Description**

TECHNICAL BACKGROUND

The present disclosure relates to a computer-implemented method for determining the locations of flow entities such as wells, for operating a reservoir. The method finds notable application in the field of production of oil and gas or hydrogen, or in the field of carbon storage.

BACKGROUND ART

In the preparation of operating a geological reservoir, one important step is to determine a pattern of flow entities, such as wells, which will be used for operating the reservoir. After having investigated the geological reservoir and having collected information about, for instance, the dimensions of the reservoir and petrophysical parameters of the reservoir, determining the pattern of flow entities implies determining the number and locations of these flow entities that enable enhanced resource recovery (or, in the case of carbon storage, enhanced storage).

However, determining a pattern of flow entities is a complex task, since the location of a well may influence properties on adjacent wells.

Existing methods for generating and optimizing these patterns can be broadly categorized into four main approaches. The first approach involves using tessellations, where elementary patterns are repeatedly utilized to create designs that are subsequently optimized by considering the position of each equipment individually. This approach is illustrated for instance in Chapter 14 Reservoir Engineering - Tarek Ahmed - ISBN 978-1-85617-803-7 Published in 2010 Copyright © 2010 Elsevier Inc.

The second approach employs properties to cluster the space into a predetermined number of domains, each corresponding to an equipment, with optimization focusing on the parameters controlling the clustering. This approach is illustrated for instance in Al-Ismael, M. A., Abouheit, F. F., and N. Y. BuKhamseen. "Use of Ranking and Clustering Analysis for Robust Well Placement and Efficient Reservoir Sweep." Paper presented at the International Petroleum Technology Conference, Dhahran, Saudi Arabia, February 2024.

The third approach iteratively positions equipment, typically considering the positions of already placed equipment, with the introduction of a component based on domain heuristics and optimization focusing on the parameters of the introduction process. This approach is illustrated for instance in Bergey, P. Generative well pattern design-principles, implementation, and test on OLYMPUS challenge field development problem. Comput Geosci 24, 2079-2094 (2020).

The fourth approach involves designing a pattern by an operator or other methods and expressing the pattern as a graph of distances between equipment, with the relational graph being optimized by modifying the topology or properties of the graph edges. This approach is illustrated for instance in Onwunalu, J.E., Durlofsky, L.J. Application of a particle swarm optimization algorithm for determining optimum well location and type. Comput Geosci 14, 183-198 (2010).

Challenges remain in efficiently generating and optimizing patterns, particularly when dealing with various topological embodiments.

SUMMARY

Accordingly, it is proposed a computer-implemented method for determining the locations of flow entities for operating a reservoir, the method comprising:

-    Receiving a geological description of the reservoir,
-    building a geographical graph comprising nodes and edges between nodes,

wherein each node represents a flow entity location and is assigned geographic coordinates, and each edge represents relationships between adjacent nodes and is assigned a value of at least one edge property, the values of said property being derived from the geological description of the reservoir,

-    implementing a deformation process on the geological graph, comprising:

   ○ defining a geological quantity over the geological graph, being function of the spacing between the nodes and of the at least one edge property assigned to the edges of the graph,
   ○ starting from initial coordinates of the nodes, adjusting the locations of the nodes based on the defined geological function, and

-    outputting the adjusted flow entities locations as determined locations for operating the reservoir.

In embodiments, the graph includes movable nodes and nodes having fixed location, and the deformation process comprises adjusting the positions of the movable nodes only.

In embodiments, adjusting the locations of the nodes based on the defined geological function comprises implementing an optimization process on the defined geological quantity where the locations of the nodes are optimization variables.

In embodiments, the optimization process is implemented under at least one constraint on the adjustment of the locations of the nodes. The at least one constraint may be chosen from:

- a constraint forcing a determined node to remain in a zone defined by geographic coordinates,
- a constraint forcing a distance between two nodes or type of nodes to remain in a defined range,
- a constraint forcing a determined node to be displaced along a defined direction, along a determined trajectory, or on a defined surface,
- a constraint forcing a determined node not to be displaced in excess or below a certain distance to a reference point,
- a constraint on a curvature of a path linking a plurality of nodes together or to a specific reference point.

In embodiments, implementing the deformation process comprises:

- defining matrices X, Y of coordinates of all nodes along respective axes x,y, each coordinate matrix being of dimension N*N where N is the number of nodes in the graph,
- defining an adjacency matrix A defining adjacent nodes,
- defining an edge property matrix P assigning, to each edge connecting adjacent nodes, the value of the at least one edge property, and
- defining the geological quantity over the geological graph as the sum, over all the edges of the graph, of the following function:

$$((X - X^T)^2 + (Y - Y^T)^2) * P * A$$

Where * designates an element wise operation between matrices.

In embodiments, the geological quantity is defined as the sum, over all the edges of the graph, of the following function:

$$(X - X^T)^2 + (Y - Y^T)^2 * P * M * A$$

Where M is a matrix defining the movable nodes and the nodes having fixed location, and * designates an element wise operation between matrices.

In embodiments, building the geographical graph comprises:

- assigning, to the nodes, values of at least one node property, and
- converting the at least one node property into at least one additional edge property, where the value of the additional edge property assigned to an edge connecting two nodes is derived from the values of the node property for the two nodes.

In embodiments, at least one node property is chosen from:

- a Cumulated oil production,
- a Gas in place around flow entity,
- a Lorenz heterogeneity coefficient computed along a drain interval,
- a Gas oil ratio,
- A time of flight between the node and a geological feature,
- A value of Saturation of Oil (SOIL) at the flow entity corresponding to the node,
- A value of Saturation of Gas (SGAS) at the flow entity corresponding to the node,
- A value of Original Oil in Place (OOIP) at the flow entity corresponding to the node,
- a Bottom Hole Flowing Pressure.

In embodiments, each edge is assigned a value of at least two edge properties, the method further comprises:

- for each edge property i, defining an edge property matrix $P_i$ assigning to each edge the value of a respective edge property,
- assigning to each edge property matrix $P_i$ at least one variation parameter, and
- combining (220) all the edge property matrices and assigned variation parameters into a single edge property matrix P.

In embodiments, the at least one variation parameter comprises at least one of:

- a weighting coefficient $W_i$, defined such that the sum of all weighting coefficients corresponding respectively to all edge property matrices equals 1, and,
- a shift coefficient $S_i$, comprised between -1 and 1.

In embodiments, the method further comprises an optimization of the geological quantity over the graph with the variation parameters as optimization variables.

In embodiments, at least one edge property is chosen from:

- an Euclidian distance
- a Time of flight between the two nodes connected by the edge,
- an Allocation factor (in the meaning of Waterflood optimization)
- an Interference profile between the two flow entities connected by the edge,
- Equivalent petrophysical properties between the two nodes connected by the edge,
- a Capacity or a Resistance resulting from a CRM model of the reservoir.

In embodiments, the method comprises implementing a normalization by the rank of at least one a node property, or an edge property.

In embodiments, a normalization by the rank of one of a node property or an edge property comprises:

- establishing a ranking of the nodes or edges according to the respective values of the node property or edge property,
- assigning a normalized value of the node property or edge property to each node or edge according to the rank of each node or edge, wherein all normalized values are comprised between 0 and 1 and are distributed linearly.

In embodiments, each edge is assigned two or more values of at least one edge property, and the method comprises performing a ranking of the edges according to the distribution of values of the edge property on the edges, and normalizing the values of the property assigned to each edge according to the rank of the edge, and wherein the geological quantity is a function of the spacing between the nodes and of the normalized value of each edge.

According to another object, it is disclosed a computer program product comprising instructions which, when the program is executed by a computer, cause the computer to carry out the method of the above description.

According to another object; it is disclosed a computing device, comprising at least a computer and a memory, the computing device being configured to implement the method according to the above description.

The disclosed method allows for an efficient determination of locations of flow entities such as wells, by a geographical graph that represents both the flow entities' locations and the reservoir's geological characteristics.

The deformation process adjusts the locations of the nodes (representing the flow entities) based on a geological quantity that takes into account both the distances between nodes and the properties of the edges connecting them. By optimizing said geological quantity, it is possible to obtain the most appropriate nodes positions for a determined set of properties or sets of properties values characterizing geological uncertainties assigned to the graph, and hence the most appropriate locations of flow entities for operating the reservoir.

In embodiments, one or more edge properties, as well as one or more node properties, may all be combined into a single edge property matrix, with variation parameters associated to each property, enabling a flexible adjustment of the nodes locations based on multiple edge properties.

The proposed approach is also compatible with constraints as to the locations of one or more flow entities, such as existing flow entities that have already been built on the reservoir.

BRIEF DESCRIPTION OF THE DRAWINGS

Other features, details and advantages will be shown in the following detailed description and on the figures, on which:

[Fig. 1a]

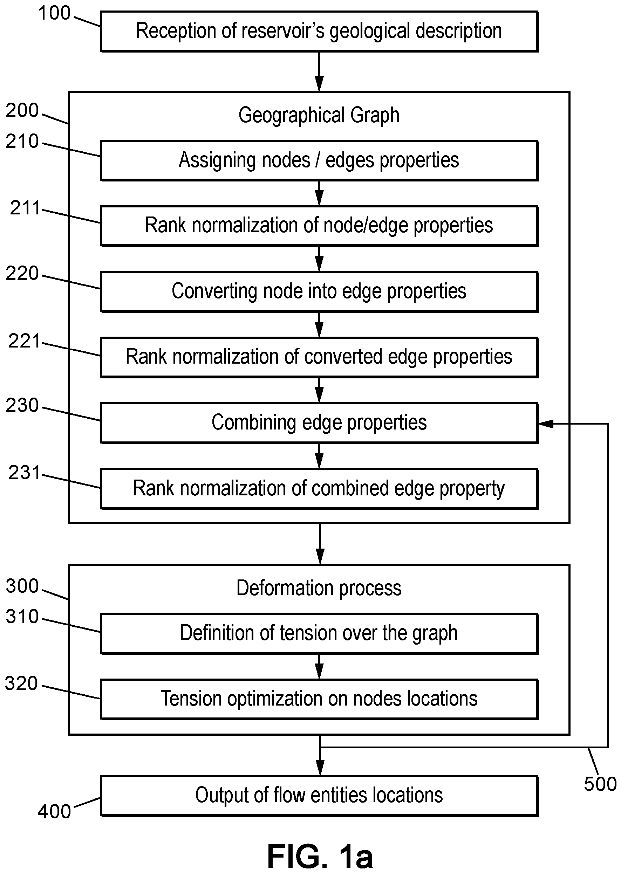

[Fig. 1a] illustrates the main steps of a method for determining the locations of flow entities in a reservoir according to an embodiment.

[Fig. 1b]

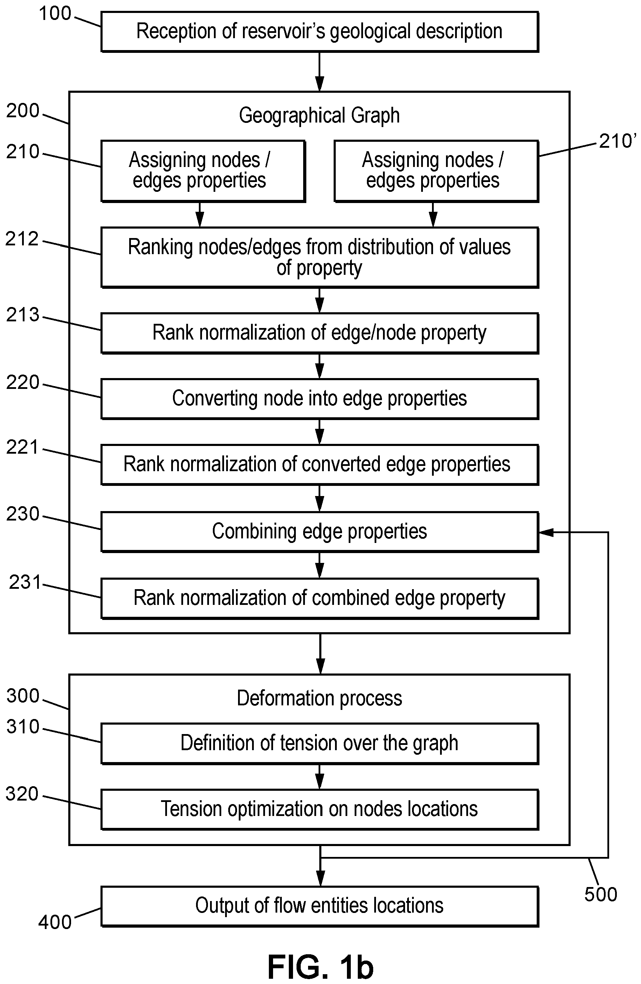

[Fig. 1b] illustrates the main steps of a method for determining the locations of flow entities in a reservoir according to another embodiment.

[Fig. 2]

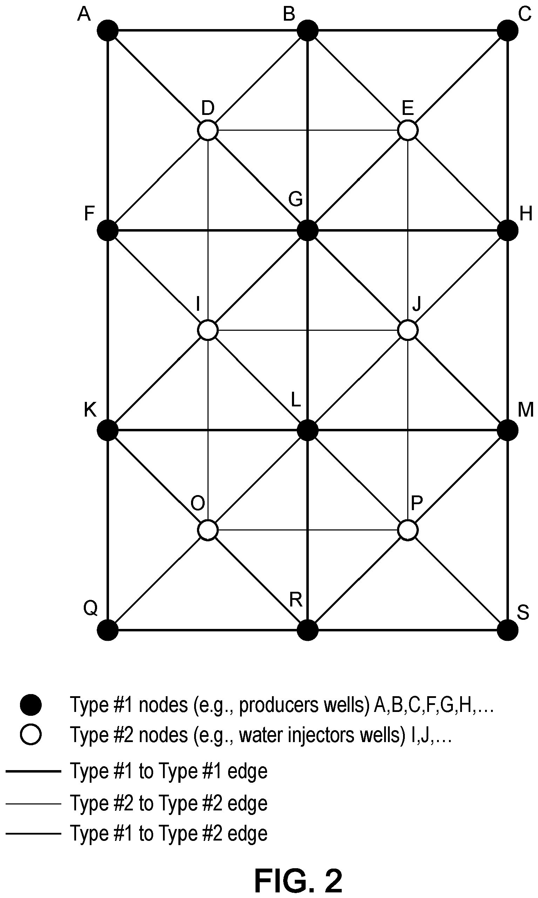

[FIG. 2] schematically illustrates a geographical graph of wells of different types and their interconnections.

[Fig. 3]

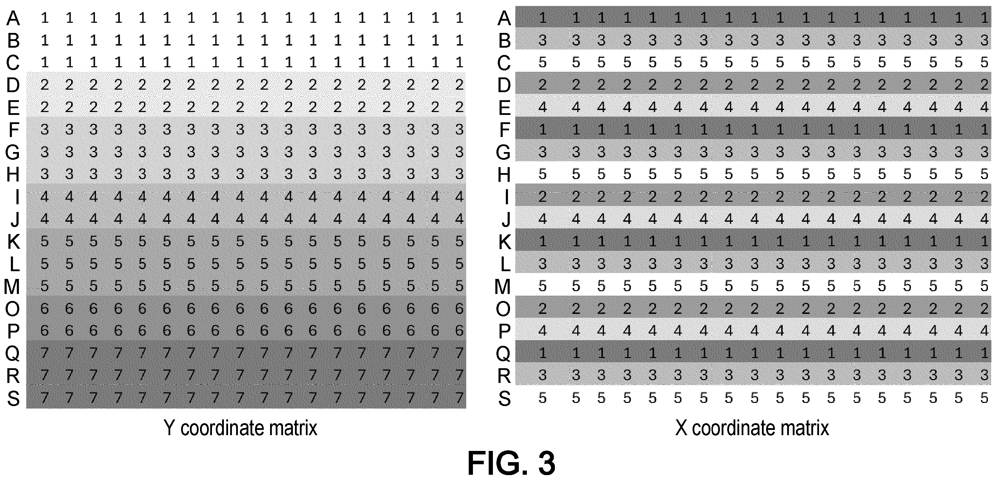

[FIG. 3] illustrates examples of X and Y location matrices for nodes in the geographical graph.

[Fig. 4]

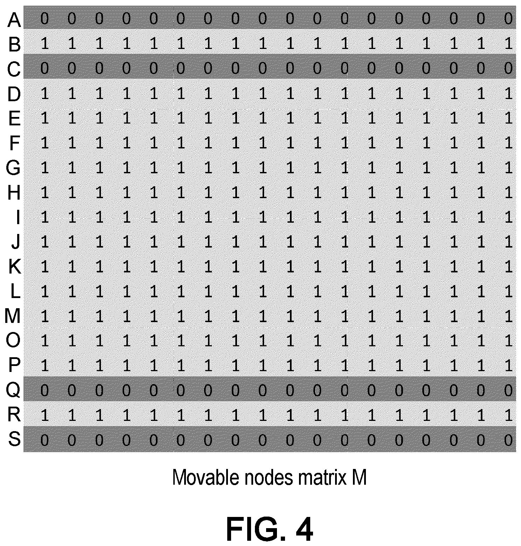

[FIG. 4] illustrates an example of matrix representation of movable and non-movable nodes in the geographical graph.

[Fig. 5a]

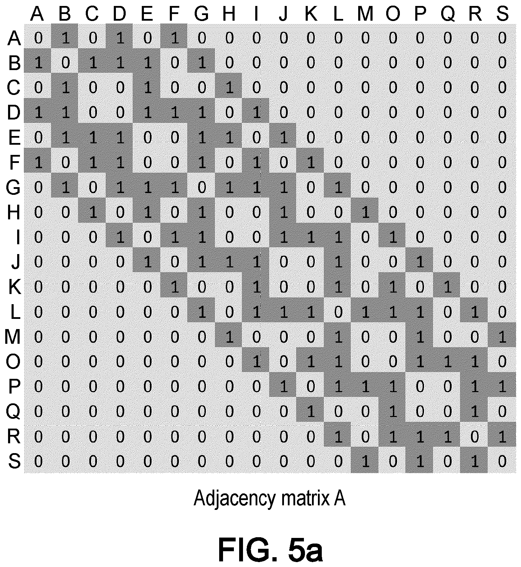

FIG. 5a illustrates a first type of adjacency matrix that may be used in embodiments of the method, being a sparse matrix identifying the connected nodes.

[Fig. 5b]

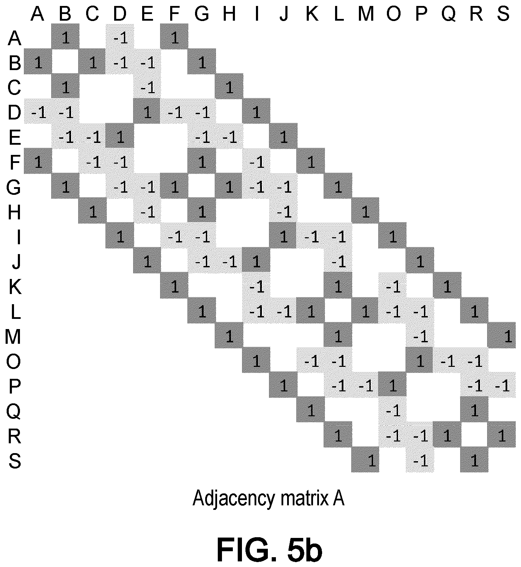

[FIG. 5B] illustrates a second type of adjacency matrix that may be used in embodiments of the method, further distinguishing whether the two connected nodes are of the same type or of different types.

[Fig. 6]

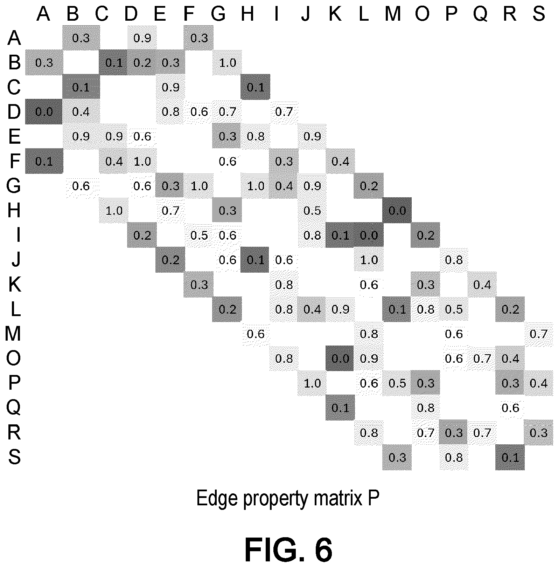

[FIG. 6] represents an example of property matrix assigned to the edges of the geographical graph.

[Fig. 7]

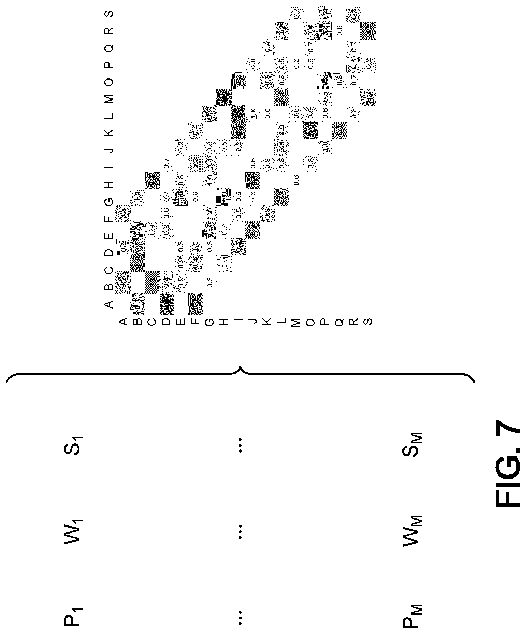

[FIG. 7] illustrates the combination of various edge properties matrices with variation parameters into a single edge property matrix.

[Fig. 8]

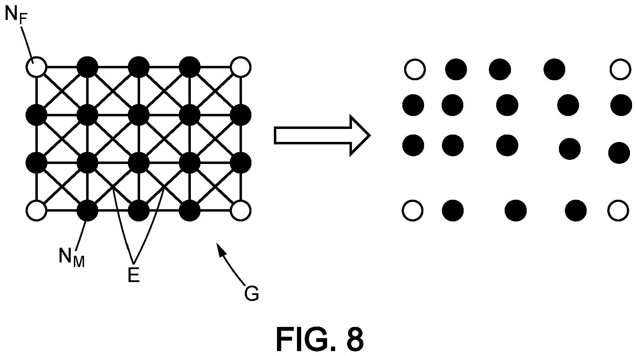

[FIG. 8] schematically illustrates the transformation of a geographical graph with nodes and edges into an optimized pattern of flow entities.

## DETAILED DESCRIPTION OF AT LEAST ONE EMBODIMENT

With reference to figures 1a and 1b, embodiments of a method for determining locations of flow entities for operating a reservoir will now be described. The method is implemented by a computing device comprising at least one processor, and a memory coupled to the processor, the memory storing instructions that, when executed by the processor, cause the processor to perform the steps of the method.

The memory may include volatile memory elements (e.g., random access memory (RAM)) and/or non-volatile memory elements (e.g., read-only memory (ROM), flash memory, hard drive, etc.). The memory may store various program modules and data, including an operating system, application programs, and the method's instructions.

The processor of the computing device may be any suitable processing unit capable of executing instructions to perform the steps of the method. The processor may include one or more central processing units (CPUs), graphics processing units (GPUs), application-specific integrated circuits (ASICs), field-programmable gate arrays (FPGAs), or other types of processing units.

The processor may be a single-core or multi-core processor, with each core capable of executing instructions independently. In a multi-core processor, the cores may work in parallel to perform the method's steps more efficiently.

The computing device may further include a display device, an input device (e.g., keyboard, mouse, touch screen), and an output device (e.g., printer, display screen). The computing device may be a standalone device, a networked device, or part of a distributed computing system.

The computing device may also include a communication interface for communicating with other devices or systems, such as a network interface card (NIC) for connecting to a local area network (LAN), wide area network (WAN), or the Internet.

In some embodiments, the computing device may be a server, a desktop computer, a laptop computer, a tablet, a smartphone, or any other suitable computing device capable of executing the method's instructions.

A "flow entity" refers to an equipment within a reservoir that facilitates the movement, extraction, injection, or management of fluids such as oil, gas, water, carbon dioxide, hydrogen, or other substances. Flow entities may in particular include wells, including production wells, and injection wells, or groups of wells. Flow entities may also refer to drain intervals thereof, i.e. to specific segments within a well, such as drain production intervals or drain injection intervals.

A "geological reservoir" refers to a subsurface formation or a series of formations that contain accumulations of fluids such as oil, gas, water, hydrogen, or other substances, or may also be operated to store resources such as carbon dioxide or hydrogen. In the context of the present disclosure, the geological reservoir corresponds to a real, existing reservoir for which ground data describing at least some geological and/or geometrical properties is available or can be acquired. The ground data can notably include, or be derived from, campaigns of seismic reflections, in-situ observations of geologists, satellite or aerial images, or wellbore data, including well logs, cores and plugs.

With reference to figures 1a and 1b, the method comprises a step 100 of receiving geological description of the reservoir. The geological description provides data about the subsurface formation, which may include at least dimensional data (dimensions of the reservoir, location, volume, etc.) as well as geological data, including rock types, petrophysical parameters such as porosity, permeability, saturation, etc. The geological description may include, or be derived from, various types of ground data acquired on the reservoir, such as:

- Seismic data,
- Well log data,
- Core and plug data,

Geological maps and cross sections, identifying geological features such as faults and fractures as well as stratigraphy information.

In embodiments, the geological description of the reservoir may be a three-dimensional model of the reservoir elaborated from ground data, and populated with the above-mentioned petrophysical parameters. The geological description of the reservoir may also comprise data obtained from fluid flow simulations implemented in such a model.

The method then comprises a step 200 of building a geographical graph representing the reservoir's flow entities and their relationships, the graph serving as a model for determining the locations of the flow entities. The graph comprises a plurality of nodes and edges connecting adjacent nodes. With reference to figure 2, is shown an exemplary and schematic representation of a geographical graph where all letters refer to respective nodes of the graph, and all squares or rectangles extending between two letters represent edges connecting the nodes.

Each node represents a potential or existing flow entity within the reservoir, and is assigned geographic coordinates along at least two axes X and Y contained in a horizontal plane, and optionally along a third axis, orthogonal to X and Y, that specify the location of the flow entity corresponding to the node within the reservoir. In embodiments, the geographic coordinates of the nodes along the at least two axes may be represented in coordinates matrices, examples of which are provided in figure 3. According to a non-limiting example, one coordinate matrix may be defined for each axis X, Y. The coordinate matrices may be vectors of dimension N where N is the number of nodes in the graph. Alternatively, and as in the example shown in figure 3, the coordinate matrices may be square matrices of dimensions NxN where all lines, respectively columns, are identical. In the example of figure 3, the left-hand side matrix corresponds to a Y coordinate matrix, and the right-hand side matrix corresponds to a X coordinate matrix corresponding to the nodes of the graph displayed in figure 2.

Furthermore, the nodes may represent different types of flow entities. For instance, the graph may include two node types, where the first node type corresponds to production flow entities (e.g. producer wells), and the second node type corresponds to injection flow entities (e.g. injector wells). The example of figure 2 represents an example of such a graph including two types of flow entities. As a consequence it includes three types of edges, namely edges connecting two production flow entities, edges connecting two injection flow entities, and edges connecting a production flow entity and an injection flow entity.

In embodiments, the nodes of the graph may include movable nodes, and nodes having a fixed location. For instance, nodes having a fixed location may correspond to flow entities that already exist on the reservoir, and movable nodes may correspond to flow entities that are yet to build on the reservoir, but whose location is not determined yet. Another example might involve movables and non-movable subset of nodes along the outer hull defined by an initial set of nodes and constraints to move such as to authorize moving nodes only on the outer hull surface. With reference to the left-hand side of figure 8, is shown an example of geographical graph of a reservoir where the nodes located at the corner of the graph are fixed nodes $N_F$, and all the other nodes are movable nodes $N_M$. With reference to figure 4, the property of a node being fixed or movable may be reflected in a matrix M having nodes equal to 0 for the fixed nodes and nodes equal to 1 for movable nodes.

Each edge connects two adjacent nodes. Thus, the edges may be defined by an adjacency matrix A. As shown in the example of figure 5a, an adjacency matrix may be a sparse matrix of dimensions NxN, comprising zeros for nodes which are not connected together and 1 for nodes which are connected together. The example of Fig. 2a is the adjacency matrix corresponding to the graph of figure 2. Therefore, the diagonal elements of the adjacency matrix are null. When different types of nodes are defined, the adjacency matrix may also define different types of edges, depending on the types of two nodes connected by an edge. In particular, and as represented in the example of Fig. 5b, said adjacency matrix may be a sparse matrix filled with "0" for nodes which are not connected, with "1" for two nodes of a same type connected by an edge, and with "-1" for two nodes of different types connected by an edge. The example of figure 5b provides such an example reflecting the different types of nodes (injector / producer) in the graph of figure 2.

Furthermore, each edge is assigned one or more edge property that quantifies the relationship between the connected nodes. In particular, the edge may be assigned at least one edge property that quantifies the impact, on a flow entity, of the neighboring presence of another flow entity. When the graph comprises edges of different types, as in figure 2 described above, the different types of edges may be assigned different properties. The edge properties are derived from the geological description of the reservoir and may include one or more of the following:

- a Euclidean distance between the connected nodes, being the straight-line distance between the two nodes,
- A time of flight between the connected nodes, being the time it takes for a fluid to travel between the two nodes.
- An allocation factor, quantifying how fluid flow is allocated between the two nodes.
- An interference profile, being a quantification of the impact of one node's operation on the other node's performance.
- Parameters derived from a Capacitance-Resistance Model (CRM) of the reservoir, such as values of capacity or resistance between the nodes.
- Equivalent petrophysical properties such as equivalent porosity, equivalent permeability, equivalent relative permeability of a phase of a diphasic fluid, between the two nodes connected by the edge, etc.

In embodiments, and as shown in the example of Fig. 6, an edge property may be represented by a matrix P of dimension NxN, having the same structure as the adjacency matrix, i.e. filled with "0" for nodes which are not connected by an edge and, for nodes connected by an edge, with the value of the edge property.

In embodiments, the nodes may also be assigned node properties derived from the geological description of the reservoir. These node properties may include one or more of the following properties:

- a Cumulated oil/gas production, being the total volume of oil/gas that has been produced at a specific flow entity over a given period.
- an oil/gas in place around flow entity, being an estimate of the total volume of oil/gas present in a part of the reservoir surrounding the flow entity,
- a Lorenz heterogeneity coefficient computed along a drain interval, which is a measure of the variability of properties such as permeability and porosity along the drain interval,
- a Gas/oil ratio (GOR), which is a ratio of the volume of gas produced to the volume of oil produced at a specific flow entity.
- A time of flight between the node and a geological feature, such as a fault or fracture, which is an amount of time required by a fluid to travel from the flow entity corresponding to the node to the geological feature.
- A value of Saturation of Oil (SOIL) at the flow entity corresponding to the node, which is the proportion of the pore volume at the flow entity corresponding to the node which is occupied by oil,
- A value of Saturation of Gas (SGAS) at the flow entity corresponding to the node, which is the proportion of the pore volume at the flow entity corresponding to the node which is occupied by gas,
- A value of Original Oil in Place (OOIP) at the flow entity corresponding to the node, which is the total volume of oil originally present in a portion of the reservoir surrounding the flow entity corresponding to the node,
- a Bottom Hole Flowing Pressure, which is the pressure measured at the bottom of the wellbore while a well corresponding to the node is producing fluid.

Other node or edge properties may be selected by a user and assigned respectively to the nodes or edges.

In embodiments, the method may include a step 211 of implementing a normalization of the node properties and/or edge properties by the rank. This operation aims at transforming the values of each property assigned to a node or an edge into a value that reflect the rank of the node / edge according to that property, while transforming the distribution of values of the properties into a linear distribution. Accordingly, such a normalization by the rank includes:

- ranking all nodes (for node properties) or all edges (for edge properties) according to their value of the considered property,
- normalizing the node or edge property of each node or edge, so that all the values of the nodes or edges are comprised between 0 and 1, while conserving the ranks of the nodes or edges, and with a linear distribution.

Normalization by the rank enables to homogenize different properties, having strongly differing ranges of values and distributions of values, as well as linearizing all computations. This transformation does not keep memory of the property values of each node or edge but their rank according to said property.

For purpose of illustration only, the table below provides the values, ranks, and normalized values by the ranks of four nodes:

| Node | Node property value | Rank | Normalized value |
|------|---------------------|------|------------------|
| A | 123 | 2 | 0.5 |
| B | 650 | 4 | 1 |

(continued)

| Node | Node property value | Rank | Normalized value |
|------|--------------------|------|------------------|
| C | 450 | 3 | 0.75 |
| D | 57 | 1 | 0.25 |

In embodiments, when the nodes are assigned at least one property, the building of the geographical graph may further include converting 220 node properties into edge properties. Said conversion may include performing at least one computation on the properties assigned to two nodes connected by an edge, to obtain a value of an edge property at the considered edge.

The computation may for instance be selected among the following:

- Sum of properties values across the edge
- Product of properties values across the edge
- Min, Max, or Average value of properties values across the edge,
- Difference of properties values across the edge,
- etc.

Furthermore, the method may also comprise normalizing the converted edge property by the ranks of the edges 221, in accordance with the description of step 211 above.

In embodiments, at least two edge properties (including, as the case may be, node properties which have been converted into edge properties) may also be combined 230 into new edge properties, for instance by any of the following computation applied on the values corresponding to the different values assigned to a same edge:

- Sum, product, subtraction, or division of the properties values,
- A property value to the power of another,
- A linear or non linear combination of the properties values, etc.

The method may also comprise normalizing the combined edge properties by the ranks of the edges 231, in accordance with the description of step 211 above.

In embodiments, the method comprises converting 220 all node properties into edge properties, and then combining 230 all edge properties together into a single edge property. With reference to figure 7, a plurality of edge properties $P_i$ may be defined, assigning an edge property value to each edge of the graph. Each edge property Pi may be represented by a matrix as the one described above with reference to figure 6. The method may then comprise assigning to each edge property Pi at least one variation parameter, and the combination 230 of all edge properties into a single edge property may be performed taking into account the assigned variation parameter(s).

The variation parameter assigned to each edge property may include at least one of:

- A weighting coefficient $W_i$, defined such that the sum of all weighting coefficients corresponding respectively to all edge properties $P_i$ equals 1. Assigning to the edge properties weighting coefficients enables giving more or less weight to a given property in the next steps of the method to determine the locations of the flow entities.
- A shift coefficient $S_i$, comprised between -1 and 1. The shift coefficient is a coefficient of direction, indicating whether or not a given property should be maximized or minimized in the subsequent steps of the method. The shift coefficient may be computed by application of a trigonometric function, for instance a sine or cosine function, to an input parameter comprised between 0 and 180°.

A single combined edge property P may thus result from a plurality of edge properties Pi as follows:

$$P = \sum_i P_i . W_i . S_i$$

In embodiments, the values of the variation parameters for each edge properties are defined by the user and fixed in the next steps of the method. Alternatively, the values of the variation parameters may be iteratively determined during implementation of the method, as described in more details below.

In embodiments, this single edge property may be normalized by rank during a step 231, i.e., transformed into a [0-1] value according to the relative rank of property values over considered edges as disclosed above. In a specific embodiment, all node properties and edge properties, including the combined edge property, are successively subject to a normalization by the rank.

Back to figure 1a, 1b, once the geographical graph is built, with all nodes assigned to geographic coordinates and the edges assigned to at least one edge property, the method comprises implementing a deformation process 300 of the geological graph, in order to determine adjusted locations of the flow entities corresponding to the nodes. The deformation process 300 is implemented at a constant number of nodes and edges, only modifying the geographic coordinates of the nodes. In other words, the topology of the geological graph does not change during the deformation process.

In embodiments, when the graph comprises fixed location nodes and movable nodes, the deformation process is implemented so as to only adjust the locations of the movable nodes.

The deformation process comprises a step 310 of defining a geological quantity, hereinafter referred to as tension, over the geological graph, where the tension is a function of the spacing between the nodes, and the edge properties assigned to each edge of the node. In embodiments, the tension may in particular be a function of a product of the spacing between two nodes connected by an edge and an edge property assigned to the edge. The spacing between the nodes may be expressed as a distance between the nodes, where said distance can be for instance an Euclidian distance, a distance computed separately for each coordinate of the nodes, a Manhattan distance on the geographical graph, etc. The distance may also take into account the evolution of the geometry of the reservoir with time. Thus, a distance may also be computed between geochronological coordinates corresponding to the nodes, by application of a Geochron transform ([Mallet, 2004]).

According to a non-limiting example, the tension may be a sum, on all the edges of the graph, of a function (e.g., product) of the (Euclidian or otherwise, e.g., Manhattan distance on grid) distance between the two nodes connected by the edge, and considered along each axis, and the value of the edge property assigned to the edge.

Reusing the notations provided above where X is an X-coordinate matrix, Y is a Y-coordinate matrix, A is an adjacency matrix, and P is an edge property matrix, the global tension on the graph may be computed as:

$$\sum_{edges} (X - X^T)^2 + ((Y - Y^T)^2) * P * A$$

where all operations, except for the transposal (denoted by the exponent T), are element-wise and not according to standard matrices computation rules. In other words, all products are performed between matrices elements at the same location within the two matrices.

When the graph comprises movable nodes and fixed positions nodes, defined by a matrix M, the global tension on the graph may be computed as:

$$\sum_{edges} (X - X^T)^2 + ((Y - Y^T)^2) * P * M * A$$

where all operations, except for the transposal (denoted by the exponent T), are element-wise and not according to standard matrices computation rules.

Once the tension is defined, the deformation process 300 comprises adjusting 320 the positions of the nodes (or, in embodiments, of the movable nodes) based on the defined tension. In particular, step 320 may comprise implementing an optimization of the value of the tension of the overall graph, where the coordinates of the nodes are the optimization variables. Depending on the edge property or properties that are assigned to the edges, the optimization may have the objective to minimize or maximize the tension over the whole graph.

The optimization itself may be performed by implementation of an algorithm known to the skilled person, such as TRIP described in Byrd, Richard H., Mary E. Hribar, and Jorge Nocedal. 1999. An interior point algorithm for large-scale nonlinear programming. SIAM Journal on Optimization 9.4: 877-900 and SQSQP described in Lalee, Marucha, Jorge Nocedal, and Todd Plantega. 1998. On the implementation of an algorithm for large-scale equality constrained optimization. SIAM Journal on Optimization 8.3: 682-706..In embodiments, when the edge property from which the tension is calculated has been normalized by the rank, the implementation on a computer of the optimization algorithm is simplified and thus performed more quickly with fewer computational resources.

In embodiments, the optimization process is performed under the hypothesis that the value of the edge property does not significantly vary when adjusting the locations of the nodes, in which case the edge properties values are not recomputed after adjusting the locations of the nodes. This hypothesis may in particular apply to compact flow entities patterns, to reservoirs exhibiting low permeability and/or low porosity, or to small modifications brought to a global pattern.

In embodiments, the optimization may be implemented under at least one constraint on the adjustment of the location of the nodes. The at least one constraint may for instance include:

- a constraint forcing a determined node to remain in a zone defined by geographic coordinates,
- a constraint forcing a distance between two nodes or types of nodes to remain in a defined range,
- a constraint forcing a determined node to be displaced along a defined direction, or along a determined trajectory, or on a defined surface,
- a constraint forcing a determined node not to be displaced or below a certain distance to a reference point,
- a constraint on the curvature of a path linking a plurality of nodes together or to a specific reference point. This may apply in particular when some nodes represent a well head and other nodes represent drain intervals, to ensure limited curvature between the well head and the drain.

Regarding in particular the hypothesis of low variation of edge properties values with the adjusting of the locations of the nodes, the optimization may be performed under the constraint of limiting the displacement of a node up to a determined amount, in order to ensure that the hypothesis is respected.

Alternatively, when no such hypothesis applies, some or all edge property values (and, consequently, the values of the single combined edge property) may be recomputed after an iteration of adjusting the locations of the nodes.

In embodiments, when a single edge property has been obtained by a combination of a plurality of edge properties (including, in cases, edge properties converted from node properties), where said combination involves variation parameters assigned to the edge properties, the deformation process may also include optimizing the tension over the graph with the variation parameters as optimization variables.

For instance, the method may include iteratively performing the deformation process as follows:

- For a given initial set of variation parameters, performing an iteration of tension optimization 320 (maximization or minimization) to output a set of flow entities locations and a corresponding optimized value of tension,
- Changing the values of at least one variation parameter 500,
- Iterating tension optimization 320 to output a second set of flow entities locations and a corresponding optimized value of tension,
- Iterating the previous step in order to optimize, over the values of variation parameters, the value of the tension.

In embodiments, the method described above may also be performed based on distinct values of the set of properties assigned to the nodes and/or edges of the same geographical graph. Implementing the method for different values of the same properties enables capturing uncertainty on the properties.

In this case, and with reference to figure 1b, the method may comprise:

- Receiving 100 the reservoir's geological description,
- Generating 200 a plurality of geographical graphs, where all graphs comprise the same nodes and edges connecting the nodes, and the same properties assigned to the nodes and/or edges, but the values of the properties are different from one graph to the other. This is denoted by references 210, 210', 210" on figure 1b.
- For at least one node property or edge property, ranking 212, the nodes or edges from the distribution of values of the properties on the nodes or edges. This may be performed as follows:

  ○ building a cumulative distribution function (CDF) of the property for each node or edge of the graph from the plurality of values of the property for the given node or edge,
  ○ comparing the obtained CDF over all nodes, respectively edges, and
  ○ performing a ranking of the nodes, respectively edges, according to the compared CDF.

Ranking the nodes or edges based on the compared CDF may be performed for instance by computing the total area under the curve for a number of different values, that may be equal for instance to the number of nodes or edges, respectively, (with the values ranging between 0 and the maximum value of the considered property) and ranking the nodes or edges in ascending order based on the total area under the curve for each value.

At this point, in each geographical graph, each node or edge is assigned a rank that takes into account uncertainty on each property assigned to the graph. The value of the considered property at each node or edge may then be normalized 213 according to the rank of the node or edge according to the definition of rank normalization given above i.e., each node or edge may be assigned a value comprised between 0 and 1, where the assigned value respects the established ranking and the values assigned to the nodes / edges are linearly distributed between 0 and 1.

The subsequent steps of the method may be implemented according to the description above, including, as the case may be:

- Converting 220 node into edge properties, and optionally performing rank normalization of the converted edge properties,

- Combining edge properties 330 into a single edge property, and optionally performing rank normalization 331, of the latter
- Implementing the deformation process 300, where the tension thus takes into account the values normalized by the rank of the edges or the nodes (as the case may be, converted into edge properties) and,
- Outputting 400 the flow entities locations.

Thus, from a plurality of graphs with different values of the set of properties assigned to the graph, the proposed method nevertheless outputs a single set of locations of flow entities that captures the uncertainties on the properties values.

Once the deformation process is implemented, the locations of the nodes corresponding to flow entities are adjusted, and the method comprises outputting 400 the final locations of the flow entities, with a view to building such flow entities on the reservoir.

**Claims**

1. A computer-implemented method for determining the locations of flow entities for operating a reservoir, the method comprising:

    - Receiving (100) a geological description of the reservoir,
    - building (200) a geographical graph comprising nodes and edges between nodes, wherein each node represents a flow entity location and is assigned geographic coordinates, and each edge represents relationships between adjacent nodes and is assigned a value of at least one edge property, the values of said property being derived from the geological description of the reservoir,
    - implementing a deformation process (300) on the geological graph, comprising:

        ◦ defining a geological quantity over the geological graph, being function of the spacing between the nodes and of the at least one edge property assigned to the edges of the graph,
        ◦ starting from initial coordinates of the nodes, adjusting the locations of the nodes based on the defined geological function, and

    - outputting (400) the adjusted flow entities locations as determined locations for operating the reservoir.

2. The computer-implemented method according to claim 1, wherein the graph includes movable nodes and nodes having fixed location, and the deformation process comprises adjusting the positions of the movable nodes only.

3. The computer-implemented method according to claim 1 or 2, wherein adjusting the locations of the nodes based on the defined geological function comprises implementing an optimization process on the defined geological quantity where the locations of the nodes are optimization variables.

4. The computer-implemented method according to claim 3, wherein the optimization process is implemented under at least one constraint on the adjustment of the locations of the nodes.

5. The computer-implemented method according to claim 4, wherein the at least one constraint is chosen from:

    - a constraint forcing a determined node to remain in a zone defined by geographic coordinates,
    - a constraint forcing a distance between two nodes or type of nodes to remain in a defined range,
    - a constraint forcing a determined node to be displaced along a defined direction, along a determined trajectory, or on a defined surface,
    - a constraint forcing a determined node not to be displaced in excess or below a certain distance to a reference point,
    - a constraint on a curvature of a path linking a plurality of nodes together or to a specific reference point.

6. The computer-implemented method according to any of the preceding claims, wherein implementing the deformation process comprises:

    - defining matrices X, Y of coordinates of all nodes along respective axes x,y, each coordinate matrix being of dimension N*N where N is the number of nodes in the graph,

- defining an adjacency matrix A defining adjacent nodes,
- defining an edge property matrix P assigning, to each edge connecting adjacent nodes, the value of the at least one edge property, and
- defining the geological quantity over the geological graph as the sum, over all the edges of the graph, of the following function:

$$((X - X^T)^2 + (Y - Y^T)^2) * P * A$$

Where * designates an element wise operation between matrices.

7. The computer-implemented method according to claim 6 in combination with claim 2, wherein the geological quantity is defined as the sum, over all the edges of the graph, of the following function:

$$(X - X^T)^2 + (Y - Y^T)^2 * P * M * A$$

Where M is a matrix defining the movable nodes and the nodes having fixed location, and * designates an element wise operation between matrices.

8. The computer-implemented method according to any of the preceding claims, wherein building the geographical graph comprises:

   - assigning, to the nodes, values of at least one node property, and
   - converting the at least one node property into at least one additional edge property, where the value of the additional edge property assigned to an edge connecting two nodes is derived from the values of the node property for the two nodes.

9. The computer-implemented method according to claim 8, wherein at least one node property is chosen from:

   - a Cumulated oil production,
   - a Gas in place around flow entity,
   - a Lorenz heterogeneity coefficient computed along a drain interval,
   - a Gas oil ratio,
   - A time of flight between the node and a geological feature,
   - A value of Saturation of Oil (SOIL) at the flow entity corresponding to the node,
   - A value of Saturation of Gas (SGAS) at the flow entity corresponding to the node,
   - A value of Original Oil in Place (OOIP) at the flow entity corresponding to the node,
   - a Bottom Hole Flowing Pressure.

10. The computer-implemented method according to any of the preceding claims, wherein each edge is assigned a value of at least two edge properties, the method further comprises:

    - for each edge property i, defining an edge property matrix $P_i$ assigning to each edge the value of a respective edge property,
    - assigning to each edge property matrix $P_i$ at least one variation parameter, and
    - combining (220) all the edge property matrices and assigned variation parameters into a single edge property matrix P.

11. The computer-implemented method according to claim 10, wherein the at least one variation parameter comprises at least one of:

    - a weighting coefficient $W_i$, defined such that the sum of all weighting coefficients corresponding respectively to all edge property matrices equals 1, and,
    - a shift coefficient $S_i$, comprised between -1 and 1.

12. The computer-implemented method according to claim 10 or 11, further comprising an optimization (500) of the geological quantity over the graph with the variation parameters as optimization variables.

13. The computer-implemented method according to any of the preceding claims, wherein at least one edge property is chosen from:

   - an Euclidian distance
   - a Time of flight between the two nodes connected by the edge,
   - an Allocation factor (in the meaning of Waterflood optimization)
   - an Interference profile between the two flow entities connected by the edge,
   - Equivalent petrophysical properties between the two nodes connected by the edge,
   - a Capacity or a Resistance resulting from a CRM model of the reservoir.

14. The computer-implemented method according to any of the preceding claims, comprising implementing a normalization by the rank of at least one a node property, or an edge property.

15. The computer-implemented method according to the preceding claim, wherein a normalization by the rank of one of a node property or an edge property comprises:

   - establishing a ranking of the nodes or edges according to the respective values of the node property or edge property,
   - assigning a normalized value of the node property or edge property to each node or edge according to the rank of each node or edge, wherein all normalized values are comprised between 0 and 1 and are distributed linearly.

16. The computer-implemented method according to any of the preceding claims, wherein each edge is assigned two or more values of at least one edge property,

   and the method comprises performing a ranking (212) of the edges according to the distribution of values of the edge property on the edges, and normalizing (213) the values of the property assigned to each edge according to the rank of the edge,
   and wherein the geological quantity is a function of the spacing between the nodes and of the normalized value of each edge.

17. A computer program product comprising instructions which, when the program is executed by a computer, cause the computer to carry out the method of any of the preceding claims.

18. A computing device, comprising at least a computer and a memory, the computing device being configured to implement the method according to any of claims 1-16.

100 — Reception of reservoir's geological description

200 — Geographical Graph

210 — Assigning nodes / edges properties

211 — Rank normalization of node/edge properties

220 — Converting node into edge properties

221 — Rank normalization of converted edge properties

230 — Combining edge properties

231 — Rank normalization of combined edge property

300 — Deformation process

310 — Definition of tension over the graph

320 — Tension optimization on nodes locations

400 — Output of flow entities locations

500

## FIG. 1a

100 — Reception of reservoir's geological description

200 — Geographical Graph

210 — Assigning nodes / edges properties

Assigning nodes / edges properties — 210'

212 — Ranking nodes/edges from distribution of values of property

213 — Rank normalization of edge/node property

220 — Converting node into edge properties

221 — Rank normalization of converted edge properties

230 — Combining edge properties

231 — Rank normalization of combined edge property

300 — Deformation process

310 — Definition of tension over the graph

320 — Tension optimization on nodes locations

500

Output of flow entities locations

400

# FIG. 1b

● Type #1 nodes (e.g., producers wells) A,B,C,F,G,H,...
○ Type #2 nodes (e.g., water injectors wells) I,J,...

—— Type #1 to Type #1 edge
—— Type #2 to Type #2 edge
—— Type #1 to Type #2 edge

## FIG. 2

X coordinate matrix

Y coordinate matrix

**FIG. 3**

|   | | | | | | | | | | | | | | | | | |
|---|---|---|---|---|---|---|---|---|---|---|---|---|---|---|---|---|---|
| A | 0 | 0 | 0 | 0 | 0 | 0 | 0 | 0 | 0 | 0 | 0 | 0 | 0 | 0 | 0 | 0 | 0 |
| B | 1 | 1 | 1 | 1 | 1 | 1 | 1 | 1 | 1 | 1 | 1 | 1 | 1 | 1 | 1 | 1 | 1 |
| C | 0 | 0 | 0 | 0 | 0 | 0 | 0 | 0 | 0 | 0 | 0 | 0 | 0 | 0 | 0 | 0 | 0 |
| D | 1 | 1 | 1 | 1 | 1 | 1 | 1 | 1 | 1 | 1 | 1 | 1 | 1 | 1 | 1 | 1 | 1 |
| E | 1 | 1 | 1 | 1 | 1 | 1 | 1 | 1 | 1 | 1 | 1 | 1 | 1 | 1 | 1 | 1 | 1 |
| F | 1 | 1 | 1 | 1 | 1 | 1 | 1 | 1 | 1 | 1 | 1 | 1 | 1 | 1 | 1 | 1 | 1 |
| G | 1 | 1 | 1 | 1 | 1 | 1 | 1 | 1 | 1 | 1 | 1 | 1 | 1 | 1 | 1 | 1 | 1 |
| H | 1 | 1 | 1 | 1 | 1 | 1 | 1 | 1 | 1 | 1 | 1 | 1 | 1 | 1 | 1 | 1 | 1 |
| I | 1 | 1 | 1 | 1 | 1 | 1 | 1 | 1 | 1 | 1 | 1 | 1 | 1 | 1 | 1 | 1 | 1 |
| J | 1 | 1 | 1 | 1 | 1 | 1 | 1 | 1 | 1 | 1 | 1 | 1 | 1 | 1 | 1 | 1 | 1 |
| K | 1 | 1 | 1 | 1 | 1 | 1 | 1 | 1 | 1 | 1 | 1 | 1 | 1 | 1 | 1 | 1 | 1 |
| L | 1 | 1 | 1 | 1 | 1 | 1 | 1 | 1 | 1 | 1 | 1 | 1 | 1 | 1 | 1 | 1 | 1 |
| M | 1 | 1 | 1 | 1 | 1 | 1 | 1 | 1 | 1 | 1 | 1 | 1 | 1 | 1 | 1 | 1 | 1 |
| O | 1 | 1 | 1 | 1 | 1 | 1 | 1 | 1 | 1 | 1 | 1 | 1 | 1 | 1 | 1 | 1 | 1 |
| P | 1 | 1 | 1 | 1 | 1 | 1 | 1 | 1 | 1 | 1 | 1 | 1 | 1 | 1 | 1 | 1 | 1 |
| Q | 0 | 0 | 0 | 0 | 0 | 0 | 0 | 0 | 0 | 0 | 0 | 0 | 0 | 0 | 0 | 0 | 0 |
| R | 1 | 1 | 1 | 1 | 1 | 1 | 1 | 1 | 1 | 1 | 1 | 1 | 1 | 1 | 1 | 1 | 1 |
| S | 0 | 0 | 0 | 0 | 0 | 0 | 0 | 0 | 0 | 0 | 0 | 0 | 0 | 0 | 0 | 0 | 0 |

Movable nodes matrix M

# FIG. 4

|   | A | B | C | D | E | F | G | H | I | J | K | L | M | O | P | Q | R | S |
|---|---|---|---|---|---|---|---|---|---|---|---|---|---|---|---|---|---|---|
| A | 0 | 1 | 0 | 1 | 0 | 1 | 0 | 0 | 0 | 0 | 0 | 0 | 0 | 0 | 0 | 0 | 0 | 0 |
| B | 1 | 0 | 1 | 1 | 1 | 0 | 1 | 0 | 0 | 0 | 0 | 0 | 0 | 0 | 0 | 0 | 0 | 0 |
| C | 0 | 1 | 0 | 0 | 1 | 0 | 0 | 1 | 0 | 0 | 0 | 0 | 0 | 0 | 0 | 0 | 0 | 0 |
| D | 1 | 1 | 0 | 0 | 1 | 1 | 1 | 0 | 1 | 0 | 0 | 0 | 0 | 0 | 0 | 0 | 0 | 0 |
| E | 0 | 1 | 1 | 1 | 0 | 0 | 1 | 1 | 0 | 1 | 0 | 0 | 0 | 0 | 0 | 0 | 0 | 0 |
| F | 1 | 0 | 1 | 1 | 0 | 0 | 1 | 0 | 1 | 0 | 1 | 0 | 0 | 0 | 0 | 0 | 0 | 0 |
| G | 0 | 1 | 0 | 1 | 1 | 1 | 0 | 1 | 1 | 1 | 0 | 1 | 0 | 0 | 0 | 0 | 0 | 0 |
| H | 0 | 0 | 1 | 0 | 1 | 0 | 1 | 0 | 0 | 1 | 0 | 0 | 1 | 0 | 0 | 0 | 0 | 0 |
| I | 0 | 0 | 0 | 1 | 0 | 1 | 1 | 0 | 0 | 1 | 1 | 1 | 0 | 1 | 0 | 0 | 0 | 0 |
| J | 0 | 0 | 0 | 0 | 1 | 0 | 1 | 1 | 1 | 0 | 0 | 1 | 0 | 0 | 1 | 0 | 0 | 0 |
| K | 0 | 0 | 0 | 0 | 0 | 1 | 0 | 0 | 1 | 0 | 0 | 1 | 0 | 1 | 0 | 1 | 0 | 0 |
| L | 0 | 0 | 0 | 0 | 0 | 0 | 1 | 0 | 1 | 1 | 1 | 0 | 1 | 1 | 1 | 0 | 1 | 0 |
| M | 0 | 0 | 0 | 0 | 0 | 0 | 0 | 1 | 0 | 0 | 0 | 1 | 0 | 0 | 1 | 0 | 0 | 1 |
| O | 0 | 0 | 0 | 0 | 0 | 0 | 0 | 0 | 1 | 0 | 1 | 1 | 0 | 0 | 1 | 1 | 1 | 0 |
| P | 0 | 0 | 0 | 0 | 0 | 0 | 0 | 0 | 0 | 1 | 0 | 1 | 1 | 1 | 0 | 0 | 1 | 1 |
| Q | 0 | 0 | 0 | 0 | 0 | 0 | 0 | 0 | 0 | 0 | 1 | 0 | 0 | 1 | 0 | 0 | 1 | 0 |
| R | 0 | 0 | 0 | 0 | 0 | 0 | 0 | 0 | 0 | 0 | 0 | 1 | 0 | 1 | 1 | 1 | 0 | 1 |
| S | 0 | 0 | 0 | 0 | 0 | 0 | 0 | 0 | 0 | 0 | 0 | 0 | 1 | 0 | 1 | 0 | 1 | 0 |

Adjacency matrix A

# FIG. 5a

|   | A | B | C | D | E | F | G | H | I | J | K | L | M | O | P | Q | R | S |
|---|---|---|---|---|---|---|---|---|---|---|---|---|---|---|---|---|---|---|
| A |   | 1 |   | -1 |   | 1 |   |   |   |   |   |   |   |   |   |   |   |   |
| B | 1 |   | 1 | -1 | -1 |   | 1 |   |   |   |   |   |   |   |   |   |   |   |
| C |   | 1 |   |   | -1 | -1 |   | 1 |   |   |   |   |   |   |   |   |   |   |
| D | -1 | -1 |   |   | 1 | -1 | -1 |   | 1 |   |   |   |   |   |   |   |   |   |
| E |   | -1 | -1 | 1 |   |   | -1 | -1 |   | 1 |   |   |   |   |   |   |   |   |
| F | 1 |   | -1 | -1 |   |   | 1 |   | -1 |   | 1 |   |   |   |   |   |   |   |
| G |   | 1 |   | -1 | -1 | 1 |   | 1 | -1 | -1 |   | 1 |   |   |   |   |   |   |
| H |   |   | 1 |   | -1 |   | 1 |   |   | -1 |   |   | 1 |   |   |   |   |   |
| I |   |   |   | 1 |   | -1 | -1 |   |   | 1 | -1 | -1 |   | 1 |   |   |   |   |
| J |   |   |   |   | 1 |   | -1 | -1 | 1 |   |   | -1 |   |   | 1 |   |   |   |
| K |   |   |   |   |   | 1 |   |   | -1 |   |   | 1 |   |   |   | 1 |   |   |
| L |   |   |   |   |   |   | 1 |   | -1 | -1 | 1 |   | 1 | -1 | -1 |   | 1 |   |
| M |   |   |   |   |   |   |   | 1 |   |   |   | 1 |   | -1 | -1 |   |   | 1 |
| O |   |   |   |   |   |   |   |   | 1 |   |   | -1 | -1 |   | 1 | -1 | -1 |   |
| P |   |   |   |   |   |   |   |   |   | 1 |   | -1 | -1 | 1 |   |   | -1 | -1 |
| Q |   |   |   |   |   |   |   |   |   |   | 1 |   |   | -1 |   |   | 1 |   |
| R |   |   |   |   |   |   |   |   |   |   |   | 1 |   | -1 | -1 | 1 |   | 1 |
| S |   |   |   |   |   |   |   |   |   |   |   |   | 1 |   | -1 |   | 1 |   |

Adjacency matrix A

# FIG. 5b

|   | A | B | C | D | E | F | G | H | I | J | K | L | M | O | P | Q | R | S |
|---|---|---|---|---|---|---|---|---|---|---|---|---|---|---|---|---|---|---|
| A |   | 0.3 |   |   | 0.9 |   | 0.3 |   |   |   |   |   |   |   |   |   |   |   |
| B | 0.3 |   | 0.1 | 0.2 | 0.3 |   |   | 1.0 |   |   |   |   |   |   |   |   |   |   |
| C |   | 0.1 |   |   | 0.9 |   |   | 0.1 |   |   |   |   |   |   |   |   |   |   |
| D | 0.0 | 0.4 |   |   | 0.8 | 0.6 | 0.7 |   | 0.7 |   |   |   |   |   |   |   |   |   |
| E |   | 0.9 | 0.9 | 0.6 |   |   | 0.3 | 0.8 |   | 0.9 |   |   |   |   |   |   |   |   |
| F | 0.1 |   | 0.4 | 1.0 |   |   | 0.6 |   | 0.3 |   | 0.4 |   |   |   |   |   |   |   |
| G |   | 0.6 |   | 0.6 | 0.3 | 1.0 |   | 1.0 | 0.4 | 0.9 |   | 0.2 |   |   |   |   |   |   |
| H |   |   | 1.0 |   | 0.7 |   | 0.3 |   |   | 0.5 |   |   | 0.0 |   |   |   |   |   |
| I |   |   | 0.2 |   | 0.5 | 0.6 |   |   |   | 0.8 | 0.1 | 0.0 |   | 0.2 |   |   |   |   |
| J |   |   |   | 0.2 |   |   | 0.6 | 0.1 | 0.6 |   |   | 1.0 |   |   | 0.8 |   |   |   |
| K |   |   |   |   | 0.3 |   |   |   | 0.8 |   |   | 0.6 | 0.3 |   | 0.4 |   |   |   |
| L |   |   |   |   | 0.2 |   |   |   | 0.8 | 0.4 | 0.9 |   | 0.1 | 0.8 | 0.5 |   | 0.2 |   |
| M |   |   |   |   |   |   | 0.6 |   |   |   | 0.8 |   |   | 0.6 |   |   |   | 0.7 |
| O |   |   |   |   |   |   |   |   | 0.8 |   | 0.0 | 0.9 |   |   | 0.6 | 0.7 | 0.4 |   |
| P |   |   |   |   |   |   |   |   |   | 1.0 |   | 0.6 | 0.5 | 0.3 |   |   | 0.3 | 0.4 |
| Q |   |   |   |   |   |   |   |   |   |   | 0.1 |   | 0.8 |   |   |   | 0.6 |   |
| R |   |   |   |   |   |   |   |   |   |   |   | 0.8 |   | 0.7 | 0.3 | 0.7 |   | 0.3 |
| S |   |   |   |   |   |   |   |   |   |   |   |   | 0.3 | 0.8 |   | 0.1 |   |   |

Edge property matrix P

# FIG. 6

EP 4 764 619 A1

$$P_1 \quad W_1 \quad S_1$$

$$\ldots \quad \ldots \quad \ldots$$

$$P_M \quad W_M \quad S_M$$

|   | A | B | C | D | E | F | G | H | I | J | K | L | M | O | P | Q | R | S |
|---|---|---|---|---|---|---|---|---|---|---|---|---|---|---|---|---|---|---|
| A |   | 0.3 |   |   | 0.9 |   | 0.3 |   |   |   |   |   |   |   |   |   |   |   |
| B | 0.3 |   |   | 0.1 | 0.2 | 0.3 |   | 1.0 |   |   |   |   |   |   |   |   |   |   |
| C |   | 0.1 |   |   |   | 0.9 |   |   | 0.1 |   |   |   |   |   |   |   |   |   |
| D | 0.0 |   | 0.4 |   |   | 0.8 | 0.6 | 0.7 |   | 0.7 |   |   |   |   |   |   |   |   |
| E |   | 0.9 | 0.9 | 0.6 |   |   | 0.3 | 0.8 |   | 0.9 |   |   |   |   |   |   |   |   |
| F | 0.1 |   | 0.4 | 1.0 |   |   | 0.6 |   | 0.3 |   | 0.4 |   |   |   |   |   |   |   |
| G |   | 0.6 |   | 0.6 | 0.3 | 1.0 |   | 1.0 | 0.4 | 0.9 |   | 0.2 |   |   |   |   |   |   |
| H |   |   | 1.0 |   | 0.7 |   | 0.3 |   | 0.5 |   | 0.0 |   |   |   |   |   |   |   |
| I |   |   | 0.2 |   | 0.5 | 0.6 |   | 0.8 | 0.1 | 0.0 |   | 0.2 |   |   |   |   |   |   |
| J |   |   |   | 0.2 |   | 0.6 | 0.1 | 0.6 |   | 1.0 |   | 0.8 |   |   |   |   |   |   |
| K |   |   |   |   | 0.3 |   |   | 0.8 |   | 0.6 |   | 0.3 |   | 0.4 |   |   |   |   |
| L |   |   |   |   | 0.2 | 0.8 | 0.6 | 0.9 | 0.1 | 0.8 | 0.5 |   | 0.2 |   |   |   |   |   |
| M |   |   |   |   |   | 0.6 |   |   | 0.8 |   | 0.6 |   |   | 0.7 |   |   |   |   |
| O |   |   |   |   |   | 0.8 |   | 0.0 | 0.9 |   | 0.6 | 0.7 | 0.4 |   |   |   |   |   |
| P |   |   |   |   |   |   | 1.0 | 0.6 | 0.5 | 0.3 |   |   | 0.3 | 0.4 |   |   |   |   |
| Q |   |   |   |   |   |   | 0.1 |   | 0.8 |   |   | 0.6 |   |   |   |   |   |   |
| R |   |   |   |   |   |   |   | 0.8 |   | 0.7 | 0.3 | 0.7 |   | 0.3 |   |   |   |   |
| S |   |   |   |   |   |   |   |   | 0.3 |   | 0.8 |   | 0.1 |   |   |   |   |   |

FIG. 7

FIG. 8

**EUROPEAN SEARCH REPORT**

Europäisches
Patentamt
European
Patent Office
Office européen
des brevets

Application Number

EP 24 30 7184

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | BERGEY PIERRE ED - COMINELLI ALBERTO: "Generative well pattern design-principles, implementation, and test on OLYMPUS challenge field development problem", COMPUTATIONAL GEOSCIENCES, vol. 24, no. 6, 16 November 2019 (2019-11-16), pages 2079-2094, XP037303617, ISSN: 1420-0597, DOI: 10.1007/S10596-019-09912-W * abstract * * page 2079 * | 1-18 | INV. G01V20/00 E21B43/30 |
| A | CN 118 036 477 A (UNIV CHINA PETROLEUM EAST CHINA) 14 May 2024 (2024-05-14) * paragraph [0003] * * paragraph [0032] * * paragraph [0065] * * claims 1, 2, 5 * | 1-18 | |
| A | US 2009/216505 A1 (SARMA PALLAV [US] ET AL) 27 August 2009 (2009-08-27) * claim 1 * | 1-18 | TECHNICAL FIELDS SEARCHED (IPC) E21B G01V |

The present search report has been drawn up for all claims

| Place of search | Date of completion of the search | Examiner |
|---|---|---|
| The Hague | 24 June 2025 | Tympel, Jens |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 30 7184

This annex lists the patent family members relating to the patent documents cited in the above-mentioned European search report.
The members are as contained in the European Patent Office EDP file on
The European Patent Office is in no way liable for these particulars which are merely given for the purpose of information.

24-06-2025

| Patent document cited in search report | Publication date | Patent family member(s) | Publication date |
|---|---|---|---|
| CN 118036477 A | 14-05-2024 | NONE | |
| US 2009216505 A1 | 27-08-2009 | CA 2715942 A1 | 27-08-2009 |
| | | US 2009216505 A1 | 27-08-2009 |
| | | WO 2009105650 A1 | 27-08-2009 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- Use of Ranking and Clustering Analysis for Robust Well Placement and Efficient Reservoir Sweep. **AI-ISMAEL, M. A.** ; **ABOUHEIT, F. F.** ; **N. Y. BUKHAMSEEN**. International Petroleum Technology Conference. February 2024
- Generative well pattern design-principles, implementation, and test on OLYMPUS challenge field development problem.. **BERGEY, P.** Comput Geosci. 2020, vol. 24, 2079-2094
- Application of a particle swarm optimization algorithm for determining optimum well location and type.. **ONWUNALU, J.E.** ; **DURLOFSKY, L.J.** Comput Geosci. 2010, vol. 14, 183-198

- **BYRD, RICHARD H.** ; **MARY E. HRIBAR** ; **JORGE NOCEDAL.** An interior point algorithm for large-scale nonlinear programming.. *SIAM Journal on Optimization*, 1999, vol. 9 (4), 877-900
- **LALEE, MARUCHA** ; **JORGE NOCEDAL** ; **TODD PLANTEGA**. On the implementation of an algorithm for large-scale equality constrained optimization.. *SIAM Journal on Optimization*, 1998, vol. 8 (3), 682-706